# EUROPÄISCHE PATENTANMELDUNG

(11) **EP 2 327 503 A1**
(43) Veröffentlichungstag der Anmeldung: **01.06.2011**
(21) Anmeldenummer: 09405203.2
(22) Anmeldetag: 25.11.2009
(51) Int. Cl.: B23K 26/06, B23K 26/40, B23K 26/00, B21D 22/02, B31F 1/07, B42D 15/00, B41M 5/24

(54) **Verfahren und Vorrichtung zur Strukturierung einer mit einer Hartstoff-Beschichtung versehenen Festkörper-Oberfläche mit einem Nanosekundenbereich-Pulslängen erzeugenden Laser und mit einem zweiten Piko- oder Femetosekundenbereich-Pulslängen erzeugenden Laser**

(71) Anmelder: Boegli-Gravures S.A., 2074 Marin (CH)
(72) Erfinder: Boegli, Charles, 2074 Marin (CH); Weissmantel, Steffen, 09117 Chemnitz (DE); Reisse, Günter, 09117 Chemnitz (DE); Engel, Andy, 04680 Colditz (DE); Boettcher, Rene, 09648 Mittweida (DE); Steffen, Werner, 6362 Stansstad (CH)
(74) Vertreter: AMMANN PATENTANWÄLTE AG BERN

(57) **Zusammenfassung**

Im Verfahren zur Strukturierung mindestens eines Bereiches einer mit einer ta-C-Beschichtung versehenen Festkörperoberfläche (9,10) wird mit einem ersten Laser (1), vorzugsweise ein Excimerlaser (1) mit Pulslängen im Nanosekundenbereich, eine erste Struktur erzeugt, auf die mit einem zweiten Laser (15), mit Pulslängen im Piko- oder Femtosekundenbereich, eine zweite, Ripples-ähnliche Struktur überlagert wird. Vorzugsweise wird die Excimerlaser-Strukturierung im Maskenprojektionsverfahren und die Femtosekundenlaser-Strukturierung im Fokusverfahren durchgeführt.
Dieses Verfahren erlaubt die rationelle Herstellung von sehr komplexen, extrem fälschungssicheren Authentifizierungs-Merkmalen und/oder von ästhetisch gefälligen, beugungsoptisch wirkenden farbigen Mustern.

## Beschreibung

Die vorliegende Erfindung bezieht sich auf ein Verfahren und Vorrichtung zur Strukturierung mindestens eines Bereiches einer mit einer Hartstoff-Beschichtung versehenen Festkörper-Oberfläche, mit einer Vorrichtung mit mindestens einem Laser mit Pulslängen im Nano-, Piko- oder Femtosekundenbereich. Dabei kann die bearbeitete Fläche die Oberfläche eines Prägewerkzeugs wie Prägewalze oder Prägestempel sein, deren Oberflächenstruktur auf ein Medium wie Verpackungsfolie oder dergleichen übertragen wird, oder es kann die Oberfläche eines Schmuckgegenstandes wie ein Uhrengehäuseteil sein. Der Begriff "Laser" steht hier für die ganze Laseranlage.

Ein solches Verfahren und eine solche Vorrichtung sind beispielsweise aus der WO 2007/012215 des gleichen A<melders bekannt. Diese PCT-Anmeldung offenbart das Erzeugen von sogenannten Ripples mit einem Femtosekundenlaser auf einem Werkstück, wobei dieses Werkstück mit einer HartstoffSchicht versehen sein kann, die aus superharten amorphen Kohlenstoff mit mehr als 50% diamantartigen sp³ Bindungsanteilen mit der Bezeichnung ta-C, oder Wolframcarbid, WC, Borcarbid, B₄C, Siliciumcarbid, SiC, oder ähnlichen Hartstoffmaterialien bestehen kann. Aus verschiedenen, im Internet abrufbaren Dokumenten geht hervor, dass sich vor allem die superharten amorphen Kohlenstoffschichten, ta-C, für verschiedene Anwendungen, insbesondere tribologische Anwendungen, aber auch beugungsoptische Anwendungen sehr gut eignen.

Ausser dem Einsatz von Laservorrichtungen mit Pulsdauern im Femtosekunden- und Pikosekunden-Bereich ist es auch an sich bekannt, Excimerlaser mit Pulsdauern im Nanosekundenbereich und Wellenlängen im ultravioletten Bereich für Mikrostrukturierungen zu verwenden. Eine Laser-Mikrostrukturierung von verschleissfesten FestkörperOberflächen ist vor allem für Prägewalzen oder -stempel erforderlich, wenn mit diesen Prägewalzen oder -stempel beispielsweise auf Verpackungsfolien für Zigaretten oder Lebensmittel fälschungssichere Authentifizierungmerkmale oder besondere beugungsoptisch ansprechende Zeichen geprägt werden sollen. Solche Verpackungsfolien bestehen überwiegend aus einer Papier- oder Kunstoffschicht, auf die eine Metallschicht aufgedampft oder gesputtert ist, oder sie bestehen gänzlich aus Metall, meistens Aluminium oder gänzlich aus Papier oder Kunststoff mit einer OberflächenBehandlung, um die optisch und beugungsoptisch wirksamen Merkmale und Strukturierungen zu gewährleisten.

Ausgehend von diesem bekannten Stand der Technik, insbesondere von der eingangs erwähnten WO 2007/012215, ist es Aufgabe der vorliegenden Erfindung, das angegebene Verfahren zur Strukturierung einer Festkörper-Oberfläche, insbesondere einer Prägewalze oder eines Prägestempels zum Prägen von fälschungssicheren AuthentifizierungsMerkmalen und/oder optisch gefällig wirkenden Zeichen derart zu verbessern, dass eine serienmässige Produktion solcher Oberflächen für das Erzeugen von Authentifizierungsmerkmalen mit erhöhter Fälschungssicherheit sowie mit einer grösseren Gestaltungsvielfalt für, durch Lichtbeugung hervorgerufene, optisch gefällig wirkenden Oberflächen möglich ist. Diese Aufgabe wird mit dem Verfahren gemäss Anspruch 1 und der Vorrichtung gemäss Anspruch 11 gelöst.

Eine weitere Aufgabe der Erfindung ist es, ein Verfahren zum Messen, Steuern und Optimieren des Mikrostrukturierungs-Verfahrens anzugeben. Diese Aufgabe wird mit dem Verfahren gemäss Anspruch 10 und Vorrichtung gemäss Anspruch 16 gelöst. Weitere Ausführungsbeispiele werden in den abhängigen Ansprüchen definiert.

Die Erfindung wird im Folgenden anhand von Zeichnungen von Ausführungsbeispielen näher erläutert.
- Fig. 1: zeigt eine Prinzipskizze einer erfindungsgemässen Vorrichtung mit zwei Lasern,
- Fig. 2: zeigt die Strahlintensitätsformung durch eine Masken- und Blendenkombination,
- Fig. 3: zeigt einen mikrostrukturierten Bereich in Form eines Sternes,
- Fig. 4: zeigt eine Prinzipskizze einer linearen Masken- und Blendenwechseleinrichtung in Draufsicht,
- Fig. 5: zeigt die Wechseleinrichtung von Figur 4 gemäss der durch den Pfeil V in Fig. 4 angegebenen Richtung,
- Fig. 6: zeigt die Wechseleinrichtung der Figur 4 gemäss der Schnittebene VI-VI in Fig. 4,
- Fig. 7: zeigt eine Prinzipskizze einer rotativen Masken- und Blendenwechseleinrichtung in Draufsicht,
- Fig. 8: zeigt die Wechseleinrichtung der Figur 7 gemäss der durch den Pfeil VIII in Fig. 7 angegebenen Richtung,
- Fig. 9: zeigt die Wechseleinrichtung von Figur 7 gemäss der Schnittebene IX-IX in Fig. 7,
- Fig. 10: zeigt eine Prinzipskizze einer weiteren Ausführungsform einer Masken- und Blendenwechseleinrichtung mit Magazinen für Masken und Blenden,
- Fig. 11: zeigt einen Schnitt gemäss der Ebene XI-XI in Fig. 10,
- Fig. 12: zeigt einen Schnitt gemäss der Ebene XII-XII in Fig. 10, und
- Fig. 13: zeigt eine Prinzipskizze eines Diffraktometers zur Messung und Justierung der Masken, Blenden und Prägewalzen sowie zur Qualitätskontrolle bei der Herstellung von Strukturierungen auf einer Prägewalze.

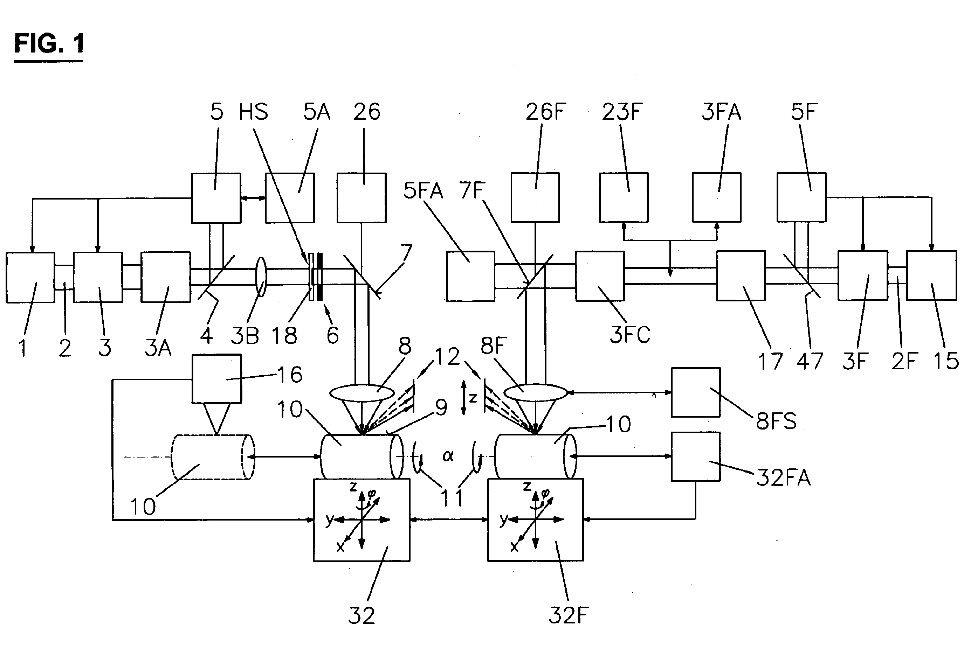

Fig. 1 zeigt eine schematische Prinzipskizze einer erfindungsgemässen Vorrichtung mit zwei Lasern zur Mikro-und Nanostrukturierung von ta-C beschichteten Prägewalzen, wobei der Hartstoff ta-C stellvertretend für Hartstoffmaterialien steht.

Mit dem ersten Laser, z.B. ein KrF-Excimer-Laser mit einer Wellenlänge von 248 Nanometer (nm), werden mittels Maskenprojektionsverfahren Mikrostrukturen in der ta-C Schicht und mit dem zweiten Laser, einem Femtosekunden-Laser mit einer mittleren Wellenlänge von 775 nm, werden mittels Fokusverfahren Nanostrukturen in der ta-C-Schicht erzeugt.

Die Mikrostrukturen können beispielsweise grabenförmige Gitterstrukturen mit Gitterperioden von 1 bis 2 *µ*m und die Nanostrukturen können beispielsweise sich selbst organisierende, als optisches Beugungsgitter wirkende Ripple-Strukturen mit Perioden von etwa 500 nm sein. Dabei ist jede beliebige, periodische Anordnung der beugungsoptisch aktiven Strukturen denkbar, welche bei Bestrahlung mit polychromatischem Licht durch Beugung eine winkelabhängige Dispersion, d.h. eine Zerlegung in Spektralfarben, erzeugen.

In Fig. 1 ist ein erster Laser, ein Excimerlaser 1 dargestellt, dessen Strahl 2 hier einen rechteckigen Querschnitt besitzt. Die Intensität dieses Laserstrahls kann durch einen Abschwächer 3 eingestellt und variiert werden. Mit Hilfe des Homogenisierer 3A und der Feldlinse 3B wird im homogenen Fleck HS eine homogene Intensitätsverteilung über den Laserstrahlquerschnitt erzeugt. Mit Hilfe der Maske 18, die im homogenen Fleck HS positioniert ist, wird aus dieser homogenen Intensitätsverteilung das für die zu erzeugende Mikrostruktur erforderliche Intensitätsprofil über den Laserstrahlquerschnitt geformt.

Die geometrische Form der Öffnung in der Blende 6, die nach der Maske und vorzugsweise in Kontakt mit dieser angeordnet ist, erzeugt die Querschnittsgeometrie, Umrissform, des durch die Maske 18 geformten Intensitätsprofils des Laserstrahls. Maske 18 und Blende 6 befinden sich in einer Masken- und Blendenwechseleinrichtung, die weiter unten ausführlich beschrieben wird.

Anstatt ein KrF-Excimerlaser kann als erster Laser ein ArF-Excimerlaser mit 193 nm Wellenlänge, ein Fluor-Laser mit 157 nm Wellenlänge oder ein XeCl-Excimerlaser mit 308 nm Wellenlänge eingesetzt werden.

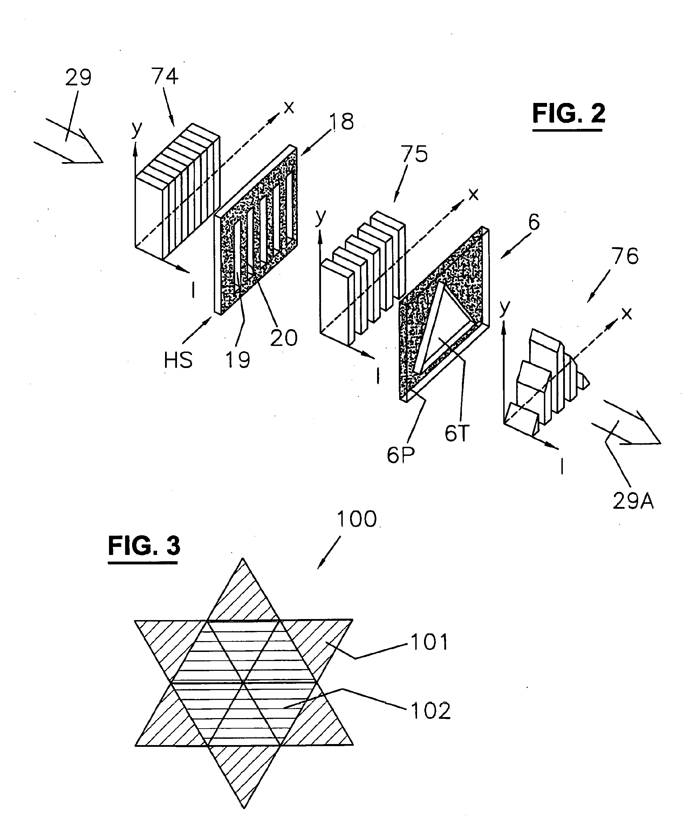

Der durch die Maske 18 und Blende 6 geformte Laserstrahl, siehe auch Fig. 2, fällt auf einen Umlenkspiegel 7, der den Strahl durch eine für diesen Laserstrahl geeignete Abbildungsoptik 8 lenkt, die mit einem vorgegebenen Abbildungsmassstab von z.B. 8:1 das für die Mikrostruktur geeignete Laserintensitätsprofil auf der Oberfläche 9 der ta-C-Schicht auf der Prägewalze 10 abbildet. Durch die Drehpfeile 11 wird angedeutet, dass die Prägewalze 10 um vorgegebene Winkel um ihre Längsachse gedreht werden kann. Die Prägewalze 10 ist auf einer Bewegungseinrichtung 32 angeordnet.

Zur Einstellung, Kontrolle und Konstanthaltung der Leistung und damit der Intensität des Laserstrahls wird mittels des Strahlteilers 4 ein geringer Laserstrahlanteil auf einen Leistungsmesser 5 gerichtet, der Daten zur Steuerung des Abschwächers 3 und/ oder des Lasers 1 liefert. Dieser Leistungsmesser 5 kann wahlweise mit einem Laserstrahl-Intensitätsprofilmessgerät 5A getauscht werden, was in Fig. 1 durch einen Doppelpfeil gekennzeichnet ist. Die Geräte 5 und 5A sind im gleichen Abstand zum Strahlteiler 4 angeordnet wie die sich im homogenen Fleck HS befindende Maske 18, damit die Leistung und die Intensitätsverteilung des Laserstrahls im homogenen Fleck HS, d.h. in der Maskenebene, korrekt gemessen werden kann. Zur Beobachtung des Mikrostrukturierungs-Prozesses dient eine Kamera 26. Der Umlenkspiegel 7 besitzt dazu ein Interferenzschichtsystem, das die Excimerlaserstrahlung mit 248 nm Wellenlänge reflektiert, sichtbares Licht jedoch transmittiert.

Zur Einstellung einer genau vorgegebenen Fokuslage des mit der Abbildungsoptik 8 auf der zu strukturierenden ta-C Schicht abgebildeten Laserstrahls über den gesamten Oberflächenbereich der Prägewalze 10 wird die Lage und die fertigungsbedingte Abweichung der Prägewalze von der Idealgeometrie mit Hilfe des Geräts 16 zur Lagevermessung der Prägewalze vermessen, beispielsweise mittels Triangulations-Messverfahren. Diese Messdaten werden dann zur automatischen Justierung der Prägewalze 10 mit Hilfe der Bewegungseinrichtung 32 und zur Korrektursteuerung der z-Achse der Bewegungseinrichtung 32 während des Strukturierungsprozesses verwendet.

Wie bei der Beschreibung des Ausführungsbeispiels gemäss Fig. 1 bereits kurz erwähnt wurde, wird das für die Excimerlaser-Strukturierung im Maskenprojektionsverfahren erforderliche Intensitätsprofil des Laserstrahls mit Hilfe einer Maske und einer Blende geformt.

Dieser Vorgang soll nachfolgend anhand von Fig. 2 näher erläutert werden: Aus der homogenen Intensitätsverteilung 27 des Laserstrahls 29 im homogenen Fleck HS wird mit Hilfe der im homogene Fleck HS positionierten Maske 18, das für die zu erzeugende Mikrostruktur in der ta-C Schicht auf der Prägewalze 10 erforderliche Intensitätsprofil über den Laserstrahlquerschnitt geformt. Die Maske 18 besitzt in der vorliegenden schematischen Darstellung gitterartig angeordnete transparente Bereiche 19 und für den Laserstrahl opake Flächenbereiche 20 und formt somit ein gitterartiges Intensitätsprofil 75 mit quaderförmigen IntensitätsprofilAnteilen.

Die Blende 6, die in Laserstrahlrichtung nach der Maske und vorzugsweise in Kontakt mit dieser angeordnet ist, erzeugt durch die geometrische Form ihrer Öffnung oder ihres transparenten Flächenbereichs die Querschnittsgeometrie des durch die Maske 18 geformten Intensitätsprofils des Laserstrahls. In der vorliegenden Darstellung ist die Form der Blendenöffnung 6T oder der für den Laserstrahl transparente Flächenbereich der Blende im opaken Teil 6P als Dreieck ausgebildet und das Intensitätsprofil 76 des Laserstrahls 29A besitzt nach der Blende somit eine Dreiecks- Querschnittsgeometrie.

In Fig. 2 wurden die Gitterperiode der Maske 18 und die Dicke und der Abstand der quaderförmigen lntensitätsprofil-Anteile des Laserstrahlintensitätsprofils 76 nach der Maske in x-Koordinatenrichtung stark vergrössert dargestellt, sie betragen konkret bei einem Abbildungsverhältnis des Masken-Projektionssystems von 8:1 beispielsweise nur 8 bis 16 *µ*m, um mit dem mittels der Maske geformten Laserstrahl 29A optisch wirkende grabenförmige Mikrostrukturen mit Gitterperioden von 1 bis 2 *µ*m in der ta-C Schicht auf der Prägewalze 10 zu erzeugen. Bei gleicher Flächengrösse des homogenen Flecks HS und des strukturierten Bereichs der Maske 18 von beispielsweise 8 mm x 8 mm = 64 mm² besteht der strukturierte Maskenbereich in Wirklichkeit, abweichend vom Schema gemäss Figur 2, aus einem Streifen-Gitter mit 1000 bis 500 Gitterperioden und der damit geformte Laserstrahl aus 1000 bis 500 quaderförmigen Intensitätsprofilanteilen.

Durch die Grösse, die Form, den Abstand, die Lage und die Anzahl der transparenten Flächenbereiche der Maske 18, nachfolgend als Maskenstruktur bezeichnet, wird das Laserstrahlintensitätsprofil für die Erzeugung der vorgegeben optisch wirkenden Mikrostruktur in der ta-C Schicht und durch die Blende 6 wird die QuerschnittsGeometrie des Laserstrahlintensitätsprofils und damit die geometrische Form des mikrostrukturierten Grundgebiets auf der Prägewalze bestimmt. Als Grundgebiet wird hier die Fläche auf der Prägewalze oder dem Prägestempel bezeichnet, die durch eine Laserstrahlpulsfolge (Pulssequenz) mit dem durch die Maske und Blende geformten und auf der ta-C beschichteten Walzenoberfläche abgebildeten Laserstrahl ohne Relativbewegung zwischen Laserstrahl und Walzenoberfläche strukturiert wird.

Folglich kann durch Veränderung der Maskenstruktur und insbesondere durch Drehen der Maske um vorgegebene Winkel um die optische Achse des Laserstrahls die Ausrichtung des mit der Maske geformten und mittels der Fokussieroptik 8 auf der ta-C Schicht der Prägewalze abgebildeten LaserstrahlIntensitätsprofils und damit die optische Wirkung des mikrostrukturierten Grundgebiets bei Bestrahlung mit polychromatischem Licht variiert werden, beispielsweise die Betrachtungsrichtung und der Betrachtungswinkel sowie die Farbe und Intensität.

Durch Drehen der Blende 6 um vorgegebene Winkel um die optische Achse des Laserstrahls wird die Ausrichtung der durch die Blende geformten Querschnittsgeometrie des mittels der Fokussieroptik auf der ta-C Schicht der Prägewalze abgebildeten Laserstrahls variiert und somit die Ausrichtung des laserstrukturierten Grundgebiets auf der Oberfläche der Prägewalze verändert. Diese Vorgehensweise wird nachfolgend beschrieben.

Die mikrostrukturierten Grundgebiete können entweder nach einem bestimmten Muster nebeneinander gesetzt oder nach Drehung der Maske um einen vorgegebenen Winkel von der gleichen Mikrostruktur unter diesem vorgegebenen Winkel überlagert werden. Durch Verwendung verschiedener Masken können auch unterschiedliche Mikrostrukturen in einem Grundgebiet überlagert werden, wodurch bei Bestrahlung mit polychromatischem Licht neuartige beugungsoptische Effekte entstehen. Beim Nebeneinandersetzen können die Grundgebiete in ihrer Flächenform und ihren Mikrostrukturen jeweils einander gleich oder voneinander verschieden sein.

Fig. 3 zeigt schematisch einen mikrostrukturierten sechsstrahligen Stern 100, der aus zwölf Grundgebieten mit dreieckiger Querschnittsform und sechs unterschiedlichen Ausrichtungen besteht und zwei unterschiedliche Ausrichtungen der das Licht beugenden, strichgitterförmigen Mikrostrukturen innerhalb der Grundgebiete aufweist. Bei Betrachtung dieses Sterns in polychromatischem Licht erscheinen das gleichartig mikrostrukturierte, aus sechs dreieckigen Grundgebieten zusammengesetzte innere Sechseck 101 und die gleichartig mikrostrukturierten Strahlen 102 des Sterns bei gleicher Betrachtungsrichtung und gleichem Betrachtungswinkel in verschiedenen Farben mit verschiedenen Intensitäten. Bei Änderung der Betrachtungsrichtung durch Drehen des Sterns um seine senkrechte Symmetrieachse bzw. bei Änderung des Betrachtungswinkels durch Neigen der Sternfläche ändert sich sowohl die Farbe als auch die Intensität des vom inneren Sechseck und den Strahlen gebeugten Lichts.

Für die Excimerlaser-Mikrostrukturierung von komplizierten, aus einer Vielzahl von Grundgebieten, wahlweise auch mit verschiedenen Flächenformen, zusammengesetzten, in Teilen optisch unterschiedlich wirkenden Oberflächen-Bereichen auf der ta-C beschichteten Prägewalze müssen mehrere Masken mit verschiedenen Maskenstrukturen und mehrere Blenden mit verschiedenen Blendenöffnungsgeometrien eingesetzt werden, wobei die Maske 18 und die Blende 6 unabhängig voneinander um einen vorgegebenen Winkel α um die optische Achse des Laserstrahls drehbar gelagert sind. Dabei kann α einen Wert zwischen 1° und 180° annehmen.

Für die Strukturierung der ta-C Schicht auf der Prägewalze sind beispielsweise folgende Bearbeitungsparameter geeignet: Pulswiederholfrequenz des Excimerlasers 30 Hz, Laserstrahlfluenz auf der Schicht 8 J/cm², Laserpulszahl pro Grundgebiet 10.

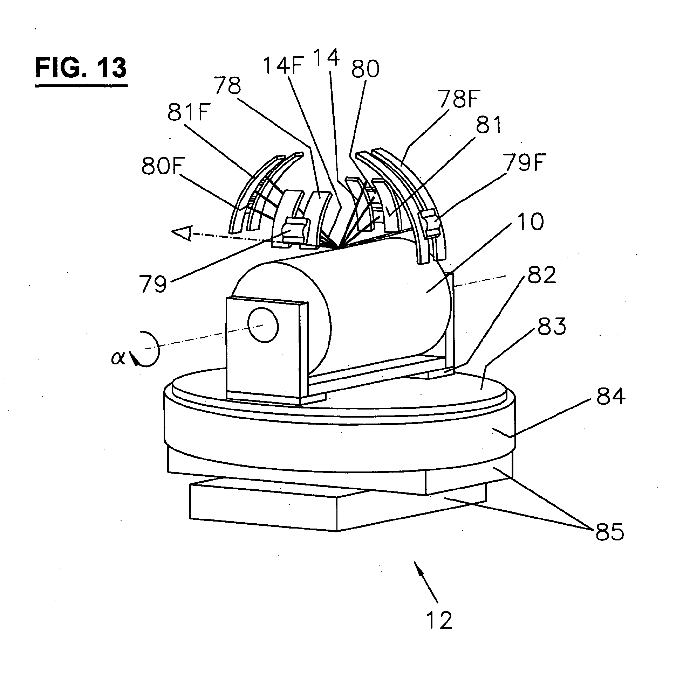

Zwecks Optimierung der Einstellung der Maske 18 und der Blende 6 wird eine in situ Diffraktometeranordnung 12, siehe Fig.1 und 13, verwendet, wobei ein Messlaserstrahl eines Lasers 79 auf die Walzenoberfläche gerichtet wird und die durch die entstandenen Strukturen reflektierten und gebeugten Strahlen 14 vom Diffraktometer ausgewertet werden.

Erfindungsgemäss wird zur Erzeugung von noch feineren Mikrostrukturen gemäss Fig. 1 zusätzlich ein zweiter Laser 15 verwendet, der ein Femtosekunden- oder Pikosekundenlaser sein kann. Der Laserstrahl 2F wird mit gaußförmiger Intensitätsverteilung über den kreisförmigen Strahlquerschnitt emittiert, dessen Intensität mit dem Abschwächer 3F eingestellt und variiert werden kann. Mit Hilfe des Polarisators 17 wird die Polarisationsrichtung des Laserstrahls, d.h. die Richtung des elektrischen Feldstärkevektors in der xz-Ebene senkrecht zur Ausbreitungsrichtung y des Laserstrahls, variiert.

Zum Erreichen sehr kleiner Fokusquerschnitte in der ta-C Schicht wird der Querschnitt des unfokussierten Laserstrahls im Strahlaufweiter 3FC vergrößert. Der linear polarisierte und aufgeweitete Laserstrahl wird mit dem Spiegel 7F umgelenkt und mit Hilfe der für die Femtosekundenlaser-Wellenlänge geeigneten Fokussieroptik 8F, die in z-Richtung verschiebbar angebracht ist, auf die ta-C Schicht fokussiert.

Zur Einstellung, Steuerung und Konstanthaltung der Leistung und damit der Intensität des Laserstrahls wird mittels des Strahlteilers 4F ein geringer Laserstrahlanteil auf einen Leistungsmesser 5F gerichtet, der Daten zur Steuerung des Abschwächers 3F und/ oder des Lasers 15 liefert. Zur Beobachtung des Strukturierungsprozesses dient eine Kamera 26F. Der Umlenkspiegel 7F ist geeignet beschichtet, um die Femtosekundenlaserstrahlung zu reflektieren, jedoch sichtbares Licht zu transmittieren.

Zur Strukturierung von vorgegebenen Oberflächenbereichen muss eine Relativbewegung zwischen dem auf die ta-C Schicht der Prägewalze fokussierten Laserstrahl und der Walzenoberfläche realisiert werden durch Drehen der Prägewalze um vorgegebene Winkelbereiche α und Φ sowie Verschieben in x- und y-Richtung. Diese Relativbewegung wird mit einer Bewegungseinrichtung 32F realisiert.

Optional können in den Strahlengang des Femtosekundenlaserstrahls ein Homogenisierer 3FA, der die gaussförmige Intensitätsverteilung über den LaserstrahlQuerschnitt in eine homogene Intensitätsverteilung umwandelt, und/oder eine Vorrichtung 23F zur Frequenzverdopplung oder -verdreifachung des Laserstrahls eingefügt werden, um die Strukturierung auch mit homogener Intensitätsverteilung und kürzeren Laserstrahlwellenlängen durchführen zu können. Das ist beispielsweise von Vorteil für die Herstellung der Masken 18 und Blenden 6 aus Quarzglas durch Femtosekundenlaser-Strukturierung.

Bei Nutzung der Freqenzverdopplungs-Vorrichtung 23F müssen der Strahlaufweiter 3FC, der Umlenkspiegel 7F und die Fokussieroptik 8F für die kürzere Wellenlänge geeignet sein.

An Stelle der Fokussieroptik 8F kann auch ein Scanner 8FS mit angepasstem Objektiv eingesetzt werden, wodurch eine schnellere Relativbewegung zwischen dem auf die ta-C Schicht der Prägewalze fokussierten Laserstrahl und einem von den Scannerparametern abhängigen begrenzten Oberflächenbereich der Walzenoberfläche realisiert werden kann, damit die erforderliche Zeit für die Strukturierung dieses begrenzten Oberflächenbereiches im Vergleich zur Realisierung der Relativbewegung mit Hilfe des Bewegungssystems 32F wesentlich verringert werden kann. Das Bewegungssystem 32F wird bei Einsatz des Scanners-Spiegelablenksystems 8FS nur zum aneinander setzen von mehreren bereits strukturierten begrenzten Oberflächenbereichen genutzt, wenn grössere Oberflächenbereiche auf der Prägewalze strukturiert werden sollen.

Mit Hilfe eines Abstandsmesssystems 32FA wird die Fokuslage des Laserstrahls vor dem Strukturierungsprozess und alternierend zum Strukturierungsprozess eingestellt und kontrolliert.

Die Femtosekundenlaserstrukturierung im Fokusverfahren wird vorwiegend zur Erzeugung von sich selbst organisierenden, beugungsoptisch wirkenden Ripples-Strukturen in den ta-C Schichten auf der Prägewalze 10 eingesetzt. Diese Ripples-Strukturen können beispielsweise parallele Wellengitter-Strukturen mit Gitterperioden von 500 bis 800 nm und Grabentiefen von 300 nm sein, wobei die parallelen Ripples, wie bereits in der PCT-Anmeldung WO 2007/012215 des gleichen Anmelders beschrieben wurde, stets senkrecht zur Polarisationsrichtung des Laserstrahls gerichtet sind.

Analog zu den durch den Excimerlaser erzeugten, überlagerten Mikrostrukturen in einem Grundgebiet kann auch eine Femtosekundenlaser-Ripples-Struktur, die durch Femtosekundenlaserstrahlpulse erzeugt worden ist, von einer zweiten Ripples-Struktur überlagert werden, deren Ausrichtung durch Änderung der Polarisationsrichtung des Laserstrahls von der ersten Ripples-Struktur verschieden ist. Des Weiteren ist es möglich, eine mit Hilfe des Excimerlasers erzeugte Mikrostruktur in einem Grundgebiet mit einer mittels des Femtosekundenlasers erzeugten Ripples-Struktur zu überlagern, wodurch bei Bestrahlung mit polychromatischem Licht weitere neuartige beugungsoptische Effekte entstehen, da der optische Effekt der mit dem Excimerlaser erzeugten Mikro-Struktur vom beugungsoptischen Effekt der mit dem Femtosekundenlaser erzeugten Ripples-Struktur überlagert wird.

Für die Erzeugung der Ripple-Strukturen in ta-C sind beispielsweise folgende Bearbeitungsparameter geeignet: Verfahrgeschwindigkeit 15 mm/s, mittlere Wellenlänge 775 nm, Pulsdauer 150 fs, Pulswiederholfrequenz 1 kHz, Fluenz im Laserstrahlfokus 2,3 J/cm², gaussscher Fokusradius 21 *µ*m. Der ebenfalls zur Erzeugung von Ripples-Strukturen einsetzbare Picosekundenlaser kann des Typs Nd:YAG sein, mit einer Wellenlänge von 1064 nm, oder ein solcher Laser mit Frequenzverdopplung mit 532 nm Wellenlänge.

Die Erzeugung der Ripple in der ta-C Schicht auf der Prägewalze erfolgt durch linienweises Abscannen der Oberfläche, wobei der Linienversatz vorzugsweise so gewählt wird, dass der Linienabstand dem Abstand der Einzelpulse entlang der Linie entspricht.

Zur Qualitätskontrolle dieser erzeugten Nanostrukturen in der ta-C Schicht auf der Prägewalze wird dasselbe in situ Diffraktometer 12 eingesetzt wie vorhergehend, das eine weitere Weisslichtquelle oder eine Laserdiode und mehrere CCD-Kamera-Arrays zur Registrierung der durch die optisch wirkenden Nanostrukturen entstehenden Beugungsordnungen besteht. Es könnte jedoch auch ein zweites in situ Diffraktometer verwendet werden. Wegen der kleineren Perioden von beispielsweise 0,5 *µ*m des von den Ripples gebildeten Wellengitters im Vergleich zu den grösseren Gitterperioden von beispielsweise 1 bis 2 *µ*m, die mit dem Excimerlaser in den ta-C-Schichten erzeugt werden, erscheinen die entsprechenden Beugungsordnungen unter kleineren Winkeln. Das Wirkprinzip dieses Diffraktometers wird weiter hinten anhand von Fig. 16 beschrieben.

Die mit dem Excimerlaser mittels Maskenprojektionsverfahren erzeugten Strukturen unterscheiden sich von den mit dem Femtosekundenlaser mittels Fokusverfahren erzeugten Strukturen in ihren Abmessungen, wobei zum Beispiel die Strukturtiefe der ersten Strukturen 250-450nm und die Gitterperioden 1,5 *µ*m, sowie die Strukturtiefe der zweiten Strukturen 250-400nm und die Gitterperioden 0,4 bis 0,7 *µ*m betragen können.

Durch die Überlagerung der von einem Excimerlaser erzeugten Gitter-Strukturen mit von einem Femtosekundenlaser erzeugten Ripples-Gitter-Strukturen wird die Nachahmung nochmals dermassen erschwert, dass auf der Grundlage der auf der Verpackungsfolie durch Prägung erzeugten komplizierten Beugungsmuster deren Nachmachung weitgehendst verunmöglicht wird. Andererseits entstehen optisch sehr effektvolle farbige Bereiche.

In vorliegendem Ausführungsbeispiel sind die optischen Elemente mit Ausnahme der Fokussieroptik ortsfest angeordnet und um verschiedene strukturierte Bereiche auf der Walzenoberfläche zu erzeugen, wird die Walze auf einem in der X- und Y-Ebene verstellbaren Kreuztisch um ihre Achse drehbar angeordnet. Zusätzlich dazu kann die Walze noch in der Z-Ebene verstellbar angeordnet sein. Es ist jedoch auch möglich, statt die Walze in Bezug auf den Strahl zu verstellen, eine weiter oben beschriebene Verstelloptik mit Scanner vorzusehen, oder eine Kombination beider Möglichkeiten.

Wie eingangs erwähnt, ist die Walzenoberfläche mit einer ta-C-Schicht versehen, die z.B. durch Laserpulsabscheidung aufgebracht wurde. Im eingangs zitierten WO 2007/012215 wurden verschiedene Beschichtungen erwähnt, auf die Versuche unternommen wurden und es wurde unterdessen erkannt, dass eine solche superharte, tetraedrisch gebundene KohlenstoffSchicht, die mittels Laserpulsabscheidung erzeugt wurde, für die vorgesehene, sehr feine Strukturierung sehr gut geeignet ist. Dabei können Schichtdicken von etwa 1 bis 2 *µ*m, insbesondere 1,5 µm, für die vorgesehenen Zwecke gut geeignet sein. Zur Verbesserung der Haftung der ta-C-Schicht auf der Unterlage ist es vorteilhaft, eine Zwischenschicht von 50 - 300 nm Dicke aus WC vorzusehen.

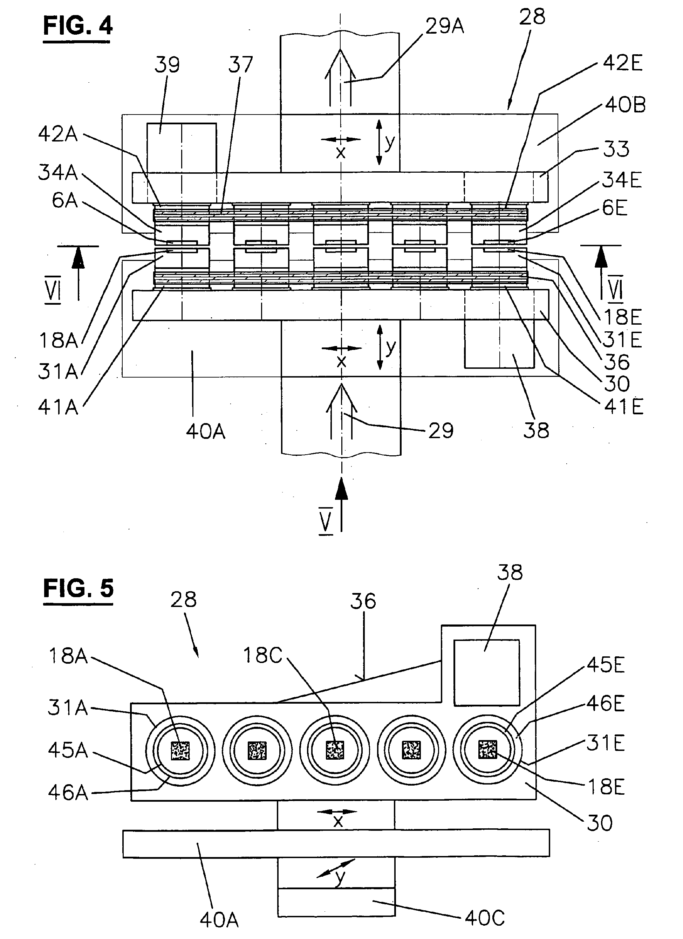

Wie in Fig. 1 angedeutet, wird in den Strahlengang des Excimerlasers mindestens eine Maske angeordnet, die sich zwischen dem Excimerlaser und der Fokussieroptik befindet. In den Fig. 4 - 12 werden Masken- und Blendenkombinationen in Wechseleinrichtungen dargestellt und näher beschrieben.

Als Substratmaterial für die Masken und Blenden wird vorzugsweise Quarzglas mit hoher optischer Qualität verwendet. Es kann jedoch auch beispielsweise Calziumfluorid, CaF, oder Magnesiumfluorid, MgF₂ verwendet werden. In einem bevorzugten Ausführungsbeispiel wird der nicht-transparente Masken- oder Blendenteil durch Aufrauhen erzeugt.

Das Feld 26F symbolisiert zwei Kameras, die der Prozess-Beobachtung dienen, um die Oberfläche des Werkstücks zu beobachten. In der Regel erhalten die Quarzmasken eine regelmässige Musterung auf einer Fläche von z.B. 8 x 8 mm, wobei diese Musterung eine einfache Schraffur sein kann, doch andere Muster sind ebenfalls erzeug- und denkbar. Die Kameras 26F sind mit einem Monitor 27 verbunden. Die Erzeugung der opaken Flächen in Streumasken oder -blenden aus Quarzglas kann auch mit dem Fluor-Laser mittels Fokus-oder Maskenprojektionsverfahren erfolgen. Vorteilhaft kann auch eine Frequenzverdopplung oder eine -verdreifachung sein, falls ein Femtosekundenlaser verwendet wird.

Für manche, einfache Anwendungen kann es genügen, eine Quarzmaske oder Quarzmasken in einer Halterung vorzusehen, um den Excimerlasertrahl zu formen. Bei sehr feinen und komplizierten, farbigen Mustern jedoch, die vor allem auch ästhetischen Bedingungen gehorchen und die weitgehend fälschungssicher sein sollen, müssen mehrere Masken mit verschiedenen Maskenstrukturen und mehreren Blenden mit verschiedenen Blendenöffnungsgeometrien eingesetzt werden.

Die gleichzeitige Formung des Laserstrahlintensitätsprofils für die Erzeugung der Mikrostrukturen zur Generierung von in vorgegebener Weise beugungsoptisch, z.B. verschiedenfarbig, wirkenden Flächen, wird dabei mit Hilfe einer Maske und die Formung der Querschnittsgeometrie und folglich der Umrissform des Laserstrahls zur Erzeugung der lückenlos aneinander setzbaren, vorgegebenen mikrostrukturierten Grundgebiete mit den in vorgegebener Weise beugungsoptisch wirkenden Mikrostrukturen, wird mit Hilfe einer Blende durchgeführt.

Dabei können die Masken und die Blenden programmgesteuert und insbesondere unabhängig voneinander gewechselt und um vorgegebene Winkel gedreht werden. Durch die Maskenstruktur werden die Betrachtungsrichtung und der Betrachtungswinkel für die optische Wirkung des mikrostrukturierten Grundgebiets und durch die Blende werden die geometrische Form und die Oberflächenlage des in vorgegebener Weise optisch wirkenden Mikrostruktur-Grundgebiets bestimmt.

Der Wechsel und die Drehung von Masken und Blenden kann mit Hilfe der nachfolgend beschriebenen Wechsel- und Drehvorrichtungen für Masken und Blenden realisiert werden: In den Fig. 4 - 12 sind einige Ausführungsformen von Wechselvorrichtungen für Masken- und Blendenhalter dargestellt, wobei grundsätzlich lineare oder rotative oder zusammengesetzte Wechseleinrichtungen vorgesehen werden können und bei allen Einrichtungen Wert darauf gelegt wird, dass sowohl die Masken als auch die Blenden unabhängig voneinander und schnell gewechselt werden können, um eine sehr grosse Vielfalt von Mustern zu ermöglichen. Dadurch wird eine effiziente und wirtschaftliche Erzeugung einer Vielfalt von Mustern und Authentifizierungsmerkmalen auf der Werkstückunterlage wie z.B. Prägewalze oder Prägestempel ermöglicht, die den höchsten ästhetischen und optischen Anforderungen genügen.

Durch eine Wechseleinrichtung wird es möglich, nicht nur von Prägewalze zu Prägewalze verschiedene Muster zu erzeugen, sondern auch auf einer und derselben Prägewalze sehr effizient und schnell eine grosse Vielzahl von verschiedenen Strukturierungen zu erzeugen, die sowohl als Authentifizierungsmerkmale als auch als ästhetisch wirksame Muster dienen.

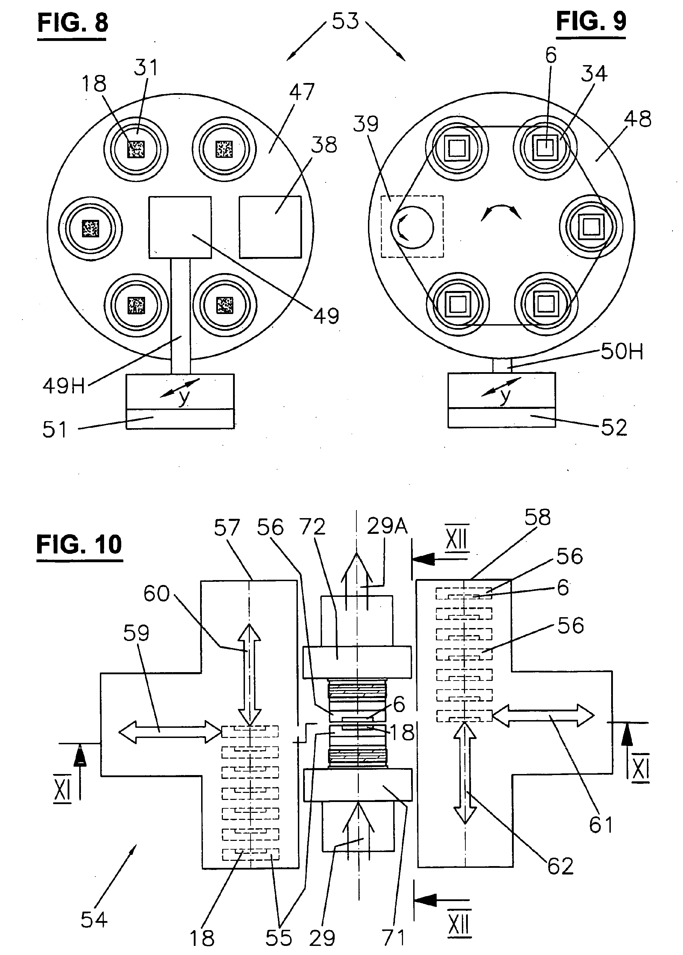

Eine lineare Wechseleinrichtung 28 ist in den Fig. 4 - 6 dargestellt. Fig. 4 stellt eine Draufsicht dar, wobei der auftreffende Laserstrahl mit Pfeil 29 und der geformte Laserstrahl mit 29A symbolisiert ist. Die Wechseleinrichtung weist eine auf einer ersten x-Koordinatentisch-Achse 40A montierte Montageplatte 30 für die Maskenhalterungen 31A - 31E auf, siehe Fig. 5, wobei die Masken 18A - 18E in die Maskenhalterungen 31A - 31E eingesetzt sind. Analog dazu enthält die Wechseleinrichtung eine auf einer zweiten x-Koordinatentisch-Achse 40B montierte Montageplatte 33 für die Blendenhalterungen 34A - 34E, siehe Fig. 9, in welche die Blenden 6A - 6E eingesetzt sind. Die ersten und zweiten x-Koordinatentisch-Achsen 40A und 40B sind jeweils auf einer y-Koordinatentisch-Achse 40C, bzw. 40D montiert.

Wie aus der Fig. 4 ferner hervorgeht, durchläuft der Laserstrahl 29 zuerst eine Maske und dann eine Blende, so dass der ausgehende Laserstrahl 29A dadurch geformt ist, siehe auch Fig. 2, und dann auf die Abbildungsoptik 8 trifft, wodurch die erzeugten Laserintensitätsprofile verkleinert auf der ta-C beschichteten Walzenoberfläche abgebildet werden. Die Maskenhalterungen werden durch einen Zahnriemen 36 und die Blendenhalterungen durch einen Zahnriemen 37 bewegt, die mit entsprechenden Zahnrädern 41A - 41E, bzw. 42A - 42E an den Halterungen kooperieren, wie dies insbesondere aus Fig. 4 hervorgeht.

In diesem Ausführungsbeispiel werden alle Halterungen durch je einen einzigen Zahnriemen bewegt, der durch einen Schrittmotor 38, bzw. 39 angetrieben wird. Es ist aber auch möglich, jede Halterung für sich durch einen Schrittmotor um einen vorgegebenen Winkel zu drehen.

Somit können die einzelnen Masken und Blenden linear ausgetauscht werden, d.h. eine der Masken 18A - 18E und eine der Blenden 6A - 6E kann in den Strahlengang gebracht werden und ausserdem können sowohl die einzelnen Masken als auch die einzelnen Blenden um einen bestimmten Winkel gedreht werden.

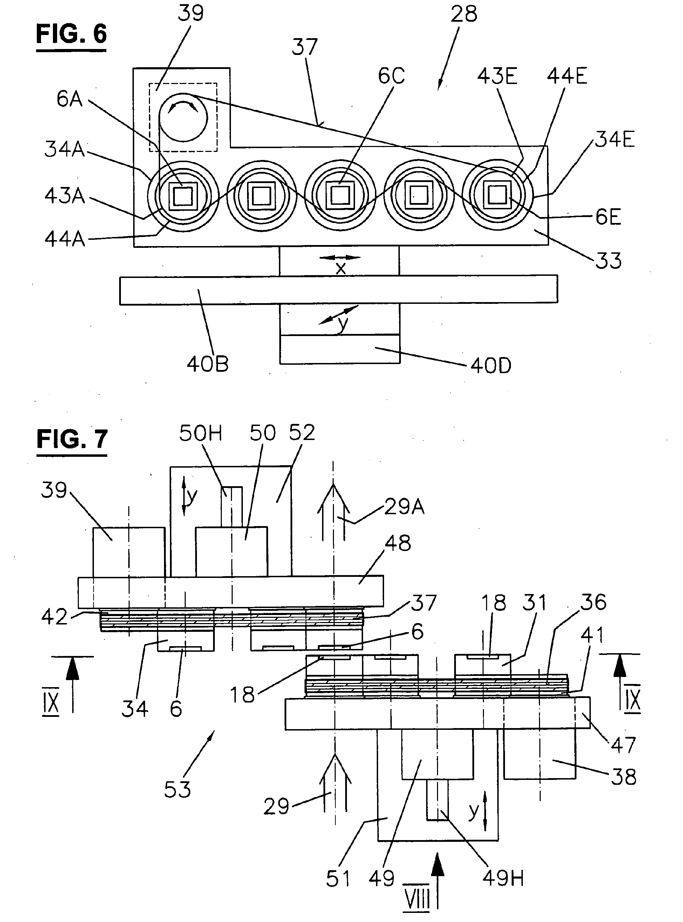

Aus Fig. 5, eine Sicht in Richtung des Pfeils V in Fig. 4, in der Laserstrahlrichtung, ist ersichtlich, dass die Maskenhalterungen 31A - 31E mit einem inneren Kugellagering 45A - 45E versehen sind, die mit einem äusseren Kugellagerring 46A - 46E zusammenwirken. Die Maskenhalterungen sind auf der Montageplatte 30 montiert. Fig. 6 zeigt einen Schnitt gemäss der Ebene VI-VI in Fig. 4 und in Laserstrahlrichtung, wobei die Blendenhalter 34A - 34E sowie der Schrittmotor 39 sowie der Zahnriemen 37 sichtbar sind und die Blendenhalterungen auf der Montageplatte 33 angeordnet sind. Aus Fig. 6 ist ferner ersichtlich, dass die Blendenhalterungen 34A - 34E jeweils einen inneren Kugellagerring 43A - 43E aufweisen, der jeweils mit einem äusseren Kugellagerring 44A - 44E zusammenwirkt.

An Stelle der Zahnriemenantriebe für die Masken- und Blendendrehung können auch Schneckenspindelantriebe über jeweils eine gemeinsame Welle, die von jeweils einem Schrittmotor angetrieben wird, eingesetzt werden. Die Drehung jeder Masken- und jeder Blendenhalterung um vorgegebene Winkel kann jedoch auch jeweils mit Hilfe eines separaten Schrittmotors für jede Masken- und für jede Blendenhalterung realisiert werden.

Die y-Koordinatentischachse 40C, die ein Verfahren der Montageplatte 30 parallel zur Laserstrahlausbreitungs-Richtung ermöglicht, dient zur genauen Positionierung der strukturierten Fläche der gerade in Bearbeitungsposition sich befindenden Maske 18C im homogenen Fleck HS des Laserstrahls und durch Verfahren der y-Koordinatentischachse 40D, die ein Verfahren der Montageplatte 33 parallel zur Laserstrahlausbreitungs-Richtung ermöglicht, wird ein vorgegebener minimaler Abstand zwischen der sich gerade in Bearbeitungsposition befindenden Maske 18C und der sich gerade in Bearbeitungsposition befindenden Blende 6C eingestellt oder die strukturierten Oberflächenseiten der Maske 18C und der Blende 6C, die Blendenöffnung, werden in direkten Kontakt gebracht

In den Fig. 7 - 9 ist eine rotativ verstellbare Anordnung von Masken und Blenden dargestellt, wobei wie in den Figuren 4-6 dieselben Masken und Blenden mit den Halterungen, inneren und äusseren Kugellagerringen, Zahnrädern, Zahnriemen und Schrittmotoren anstatt linear auf einer rechteckigen Montageplatte jeweilen rotativ auf einer kreisrunden Montageplatte 47 bzw. 48 angeordnet sind und entweder ein Schrittmotor 38 bzw. 39 je alle Masken- oder Blendenhalterungen mittels eines Zahnriemens 36 bzw. 37 zugleich antreibt oder jede Halterung einzeln durch je einen Schrittmotor angetrieben wird.

Fig. 8 ist eine Sicht in Richtung des Pfeils VIII in Fig. 7, in der Laserstrahlrichtung und Fig. 9 ist ein Schnitt gemäss der Ebene IX-IX in Fig. 7. Die Montageplatten werden durch je einen Schrittmotor 49 mit Halterung 49H für die Montageplatte 47, bzw. 50 mit Halterung 50H für die Montageplatte 48 angetrieben und sind auf einer y-Koordinatentischachse 51 zur Positionierung der Masken 18A-18E, bzw. y-Koordinatentischachse 52 zur Positionierung der Blenden 6A-6C in y-Richtung angeordnet. Die kreisförmige Anordnung 53 kann kompakter gebaut werden als die lineare Anordnung 28.

In den Fig. 10 - 12 ist eine weitere Wechseleinrichtung 54 dargestellt, in der die Masken und Blenden mit ihren Fassungen je in einem Magazin 57 bzw. 58 angeordnet sind und von dort unabhängig voneinander abgerufen und in den Strahlengang eingesetzt werden können. In dieser Stellung können sie um ihre eigene Achse gedreht werden.

Aus Fig. 10 geht hervor, dass sich jede Maske 18 in einer Fassung 55 und jede Blende 6 in einer Fassung 56 befindet und dass die Masken- und Blendenfassungen jeweils in einem Magazin 57, bzw. 58 angeordnet sind, wobei sich die Maskenfassungen in einem Maskenwechsler 59 und in einem Maskenschieber 60 befinden und analog die Blendenfassungen in einem Blendenwechsler 61 und in einem Blendenschieber 62 angeordnet sind, wobei diese Einrichtungen durch Pfeile symbolisiert sind.

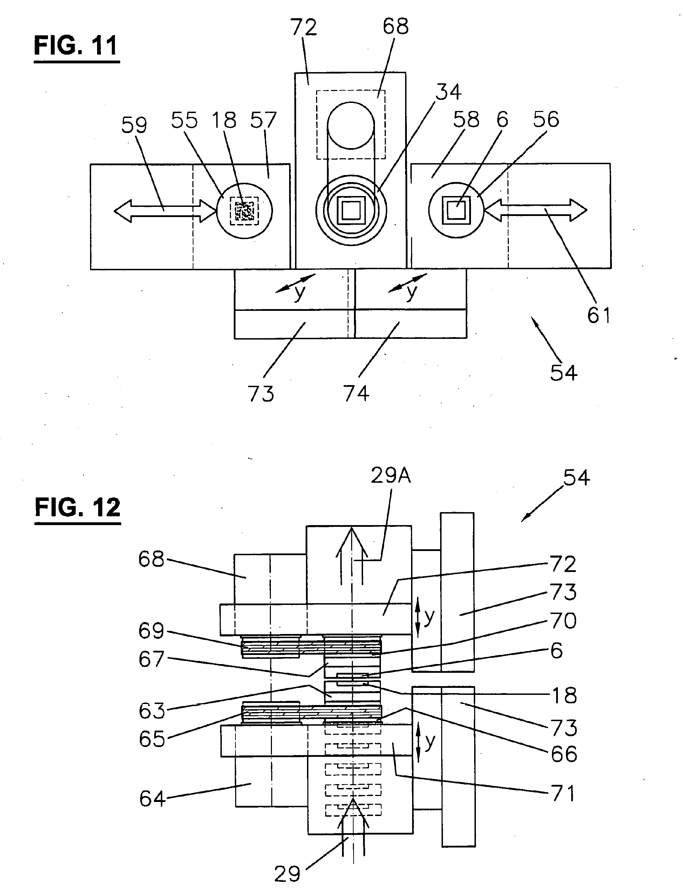

Insbesondere aus Fig. 12, einem Schnitt gemäss der Ebene XII-XII in Fig. 10, ist erkenntlich, dass sowohl die Maske als auch die Blende gedreht werden kann. Dazu gelangt die Masken- bzw. Blendenfassung in eine drehbar angeordnete Maskenhalterung 63, bzw. Blendenhalterung 67, die über einen Schrittmotor 64, bzw. 68 um einen vorgegebenen Winkel gedreht werden kann, wobei der Antrieb von Schrittmotor 64 über einen Zahnriemen 65 erfolgt, der mit einem Zahnrad 66 an der Maskenhalterung verbunden ist. Desgleichen wird die Blendenhalterung 67 durch einen Schrittmotor 68, der über einen Zahnriemen 69 auf Zahnrad 70 an der Blendenhalterung wirkt, um einen vorgegebenen Winkel gedreht.

Sowohl der Masken- als auch der Blendendrehmechanismus sind jeweils auf einer Montageplatte 71 bzw. 72 montiert. Die Montageplatte 71 des Maskenhalters und das Maskenmagazin 57 sowie die Montageplatte 72 des Blendenhalters und das Blendenmagazin 58 sind jeweils auf einer y-Koordinatentisch-Achse 73, bzw. 74 angeordnet.

Bei der Verwendung einer komplexen Vorrichtung mit zwei Laseranlagen und Masken- sowie Blendenwechseleinrichtungen zur Erzeugung von beugungsoptisch wirkenden Strukturen ist es unerlässlich, eine wirksame Kontrolle der erzeugten Strukturen durchzuführen. Theoretisch könnte man eine Prägewalze oder einen Prägestempel strukturieren und diese Werkstücke dann in einem Labor untersuchen, um anschliessend bei Fehlstellen die Vorrichtung zu justieren. Dies ist jedoch für eine effiziente Produktion von bearbeiteten Werkstücken, insbesondere Prägewalzen, zu umständlich und zu zeitraubend.

Es wird daher vorgeschlagen, eine Mess- und Justiereinrichtung mit einer Diffraktometeranordnung gemäss Fig. 13 vorzusehen, die während der Strukturierung der Prägewalze die entstandenen Strukturen misst und eine Regelung der Strahlintensität, der Fokuslage, bzw. Lage der Abbildungsebene, usw. zu ermöglichen. Dabei werden gleichzeitig mehrere Beugungsordnungen ausgewertet und sowohl miteinander als auch mit festgelegten Norm-Beugungsaufnahmen verglichen.

Die stark vereinfachte und schematisch dargestellte Diffraktometeranordnung 12 ist oberhalb der Prägewalze 10 montiert und enthält im wesentlichen zwei erste im Halbkreis angeordnete Halterungssegmente 78 und 81, an denen Laserdioden 79 zur Erzeugung von einem Messstrahl 14 mit vorgegebenen Querschnitt, bzw. CCD-Kamera-Arrays 80 montiert sind, die der Messung der an den erzeugten Mikrostrukturen gebeugten Strahlanteile 14 dienen sowie zwei zweite im Halbkreis angeordnete Halterungssegmente 78F und 81F, an denen Laserdioden 79F zur Erzeugung von einem Messstrahl 14F mit vorgegebenen Querschnitt, bzw. CCD-Kamera-Arrays 80F montiert sind, die der Messung der an den erzeugten Ripples-Strukturen gebeugten Strahlanteile 14F dienen. Dazu kommt noch eine nicht dargestellte Auswerteelektronik. Die CCD-Arrays können jeweils entlang von Viertelkreisen verfahren werden, um verschiedene Beugungsordnungen zu erfassen oder die Arrays können zur Registrierung der verschiedenen Beugungsordnungen ähnlich wie ein Röntgenstrahldetektor im Raum verfahren werden.

Somit kann für jede Prägestruktur automatisch die Lage der Beugungsordnungsbilder beim ersten Raumscannen des Arrays erfasst und registriert werden, z.B. beim Test der gerade strukturierten Prägewalzen. Die Prägewalze ist auf einer dreh- und verschiebbaren Bewegungseinrichtung gelagert, beispielsweise über wenigstens ein Piezostellglied 82, um die genaue horizontale Ausrichtung der strukturierten, bzw. der zu strukturierenden Festkörper-Oberfläche auf einem Drehtisch 83 zu ermöglichen, der seinerseits auf einem Hubtisch 84 angeordnet ist und der mit einem x-y-Koordinatentisch 85 verbunden ist.

Zur in situ Qualitätskontrolle gemäss Fig. 1 wird der monochromatische Laserstrahl der Laserdiode oder der Strahl der Weisslichtquelle mit geringem Querschnitt auf das zu untersuchende Grundgebiet gerichtet. Die verschiedenen Intensitäten der durch die optische Wirkung der Mikro- bzw. Nanostrukturen unter verschiedenen Beugungswinkeln erscheinenden Beugungen oder die Intensitätsverteilungen in den Beugungsordnungen werden mit der DiffraktometerAnordnung 12 registriert und miteinander verglichen. Die Intensitäten und insbesondere die Intensitätsverteilungen in den Beugungsordnungen werden durch die geometrische Form, die Tiefe und die Masshaltigkeit der erzeugten Strukturen bestimmt, so dass Formänderungen und zu geringe Strukturtiefen registriert werden können. Bei zu starker Abweichung von der vorgegebenen Normstruktur wird der Strukturierungsprozess unterbrochen und eine Anpassung der Laserstrahlparameter und der Walzenlage durchgeführt.

Für die umfassende Qualitätskontrolle mit Hilfe des in Fig. 13 dargestellten Diffraktometers wird der Strahl der Weisslichtquelle mit geringem Querschnitt auf die Oberfläche einer fertig strukturierten Prägewalze 10 gerichtet. Dabei werden nacheinander die mit dem Excimerlaser mikrostrukturierten Flächenanteile mit einer Weisslichtquelle und die mit dem Femtosekundenlaser nanostrukturierten Flächenanteile mit einer anderen Weisslichtquelle bestrahlt. Der Einfallswinkel der Strahlen kann durch Verschieben der Weisslichtquellen in den kreisbogenförmigen Halterungen verändert werden. Die durch die optische Wirkung der mikrostrukturierten Flächenanteile entstehenden Beugungsordnungen werden mit Hilfe der CCD-Kamera-Arrays 80F und die durch die optische Wirkung der nanostrukturierten Flächenanteile entstehenden Beugungsordnungen werden mit Hilfe der anderen CCD-Kamera-Arrays 80 registriert.

Zur exakten Registrierung der unter verschiedenen Beugungswinkeln erscheinenden Beugungsordnungen sind die Arrays in den kreisbogenförmigen Halterungen verschiebbar angeordnet.

Wegen der grösseren Perioden der beugenden Strukturen von beispielsweise 1 bis 2 *µ*m, die durch Mikrostrukturierung mit dem Excimerlaser mittels Maskenprojektionsverfahren in den ta-C Schichten erzeugt werden, im Vergleich zu den kleineren Gitterperioden der Ripples von beispielsweise 0,5 *µ*m, die durch Nanostrukturierung mit dem Femtosekundenlaser erzeugt werden, erscheinen die entsprechenden Beugungsordnungen unter verschieden grossen Winkeln. Um eine Überlagerung der verschiedenen Beugungsordnungen zu vermeiden, wird der Radius der kreisbogenförmigen Halterung 81 deshalb kleiner gewählt als der Radius der kreisbogenförmigen Halterung 81F.

Aus diesen Messungen können folgende Eigenschaften für den gesamten strukturierten Oberflächenbereich der Prägewalze quantitativ ermittelt werden, wie:
Bildschärfe, Bildkontrast oder Farbeindruck aus dem Intensitätvergleich.
Grösse und Verteilung von optimal und nicht optimal strukturierten Teilflächen.
Differenzieller Strukturierungsgrad als das Verhältnis der in einem kleinen vorgegebenen Flächenbereich ermittelten, optimal beugende Bereiche der erzeugten Strukturen zur Grösse des kleinen Flächenbereichs. Integraler Strukturierungsgrad als das Verhältnis der summaren Fläche der optimal beugenden Bereiche der erzeugten Strukturen zur Gesamtfläche des Messfeldes. Qualitätskennzahlen für die mikro- und nanostrukturierten Oberflächenbereiche.

Bei der Verwendung einer mit obigem Verfahren strukturierten Prägewalze wird beispielsweise eine Verpackungsfolie zwischen einer derart strukturierten Prägewalze und einer Gegenwalze hindurchgeführt und die Stellen, an denen nachher in einem an sich bekannten Verfahren ein Logo durch weglassen von Zähnen entsteht, mikrostrukturiert, um dann mittels einem nachgeschalteten Prägewalzenpaar konventionell satiniert zu werden.

Bei einem solchen Verfahren ist es auch möglich, eine entsprechend geänderte und angepasste Version einer Diffraktometeranordnung für die Messung der erzeugten Strukturen auf der Verpackungsfolie zu verwenden, und die Messwerte zur Korrektur bei der Herstellung der Strukturen auf der Prägewalze zu verwenden.

Ausgehend von obiger Beschreibung sind im Rahmen der Erfindung Variationen möglich. So ist es möglich, anstatt Masken und Blenden aus Quarzplatten vorzusehen, Masken und/oder Blenden aus beispielsweise CaF₂ herzustellen oder mittels elektrisch veränderbaren Kristallen zu gestalten, in welchen Zonen hoher oder sehr kleiner Transparenz für den Laserstrahl erzeugt werden können. Blenden können auch aus Metallfolien hergestellt sein.

Als Werkstückoberfläche wurde in der Beschreibung beispielhaft eine Prägewalze angesprochen, doch ist die Erfindung ebenfalls für die Strukturierung von anderen beschichteten oder nicht beschichteten Oberflächen geeignet, wie zum Beispiel eine erhabene Oberfläche eines Prägestempels oder Zähne einer Prägewalze, oder eine Oberfläche, die direkt das einfallende Licht beugt, wie beispielsweise ein Uhrengehäuseteil oder eine Münze, wie z.B. Schmuckmünze oder Gebrauchsmünze oder ein Schmuckstück.

## Patentansprüche

1. Verfahren zur Strukturierung mindestens eines Bereiches einer mit einer Hartstoff-Beschichtung versehenen Festkörperoberfläche mit mindestens einem Laser mit Pulslängen im Nano- oder im Piko- bzw. Femtosekundenbereich, **dadurch gekennzeichnet, dass** mit einem ersten Laser mit Pulslängen im Nanosekundenbereich eine erste Struktur erzeugt wird, auf die mit einem zweiten Laser mit Pulslängen im Piko- oder Femtosekundenbereich eine zweite, Ripplesförmige Struktur überlagert wird.

2. Verfahren nach Anspruch 1, **dadurch gekennzeichnet, dass** die erste Struktur im Maskenprojektionsverfahren und die zweite Struktur im Fokusverfahren erzeugt werden.

3. Verfahren nach Anspruch 1 oder 2, **dadurch gekennzeichnet, dass** die Hartstoff-Beschichtung aus ta-C-, Wolframcarbid (WC), Borcarbid (B₄C), Siliciumcarbid (SiC), oder ähnlichen Hartstoffmaterialien besteht.

4. Verfahren nach Anspruch 3, **dadurch gekennzeichnet, dass** zwischen einer ta-C-Hartstoffschicht und der Unterlage eine Wolframcarbid-Schicht mit einer Dicke zwischen 50 und 300 nm angeordnet ist.

5. Verfahren nach Anspruch 1, **dadurch gekennzeichnet, dass** die erste und/oder die zweite Struktur je durch Überlagerung mehrerer Mikrostrukturen erzeugt wird, wobei die überlagernden Strukturen mit den überlagerten Strukturen jeweils einen Winkel (α) bilden oder eine unterschiedliche Ausrichtung aufweisen.

6. Verfahren nach einem der Ansprüche 1 bis 5, **dadurch gekennzeichnet, dass** zur Erzeugung der ersten Struktur durch den ersten Laser im homogenen Fleck (HS) des optischen Systems eine Maske und anschliessend eine Blende vor der Abbildungsoptik verwendet werden und zur Erzeugung der zweiten Struktur zwischen dem Femtosekundenlaser und der zugehörigen Fokussieroptik ein Polarisator verwendet wird.

7. Verfahren nach Anspruch 6, **dadurch gekennzeichnet, dass** mindestens eine Maske und eine Blende in einer Wechseleinrichtung angeordnet sind, wobei sowohl eine beliebige Maske als auch eine beliebige Blende unabhängig voneinander in den Strahlengang des ersten Lasers bringbar sind.

8. Verfahren nach Anspruch 7, **dadurch gekennzeichnet, dass** die Masken und Blenden in der Wechseleinrichtung um sich selbst drehbar sowie linear oder rotativ verschiebbar sind.

9. Verfahren nach Anspruch 8, **dadurch gekennzeichnet, dass** die Masken und Blenden je in einem Magazin angeordnet sind.

10. Verfahren nach einem der Ansprüche 1 bis 9, **dadurch gekennzeichnet, dass** bei der Herstellung der Strukturen auf der Werkstückoberfläche, diese Strukturen mittels eines Diffraktometers vermessen werden und die Messwerte zum Einstellen der Strahlintensität und/oder der Abbildungs- und Fokussieroptik verwendet werden.

11. Vorrichtung zur Durchführung des Verfahrens nach einem der Ansprüche 1 bis 10, **dadurch gekennzeichnet, dass** sie einen ersten Laser (1) im Nanosekundenbereich sowie einen zweiten Laser (15) im Pikosekunden- oder FemtosekundenBereich aufweist, wobei die Vorrichtung Mittel (32, 32F) aufweist, um die Oberfläche (9) des zu strukturierenden Gegenstandes (10) zuerst in die Abbildungsebene der Abbildungsoptik (8) des ersten Laserstrahls (2) und dann in die Fokusebene der Fokussierungsoptik (8F) des zweiten Laserstrahls (2F) zu bringen.

12. Vorrichtung nach Anspruch 11, **dadurch gekennzeichnet, dass** der erste Laser (1) ein KrF-Excimerlaser mit einer Wellenlänge von 248 nm, oder ein ArF-Excimerlaser mit 193 nm Wellenlänge, oder ein Fluor-Laser mit 157 nm Wellenlänge, oder ein XeCl-Excimerlaser mit 308 nm Wellenlänge ist.

13. Vorrichtung nach Anspruch 11 oder 12, **dadurch gekennzeichnet, dass** der zweite Laser zur Erzeugung der Ripples-Strukturen ein Femtosekundenlaser (15) mit einer mittleren Wellenlänge von 775 nm oder ein Picosekundenlaser des Typs Nd:YAG, mit einer Wellenlänge von 1064 nm oder der freqenzverdoppelten Wellenlänge von 532 nm ist.

14. Vorrichtung nach einem der Ansprüche 11 bis 13, **dadurch gekennzeichnet, dass** zwischen dem ersten Laser (1) und seiner Abbildungsoptik (8) mindestens eine Masken- und Blendenkombination (18, 6) angeordnet ist und eine Anzahl von Masken- und Blendenkombinationen in einer Wechseleinrichtung (28, 53, 54) angeordnet ist und die Wechseleinrichtung ausgebildet ist, sowohl einer der Masken (18) als auch eine der Blenden (6) jeweils unabhängig voneinander in den Strahlengang (29) des ersten Lasers (1) zu bringen, wobei die Masken (18, 18A-18E, 18/1-18/9) und Blenden (6, 6A-6E) linear oder rotativ verschiebbar sowie um sich selbst drehbar in Halterungen (31A - 31E; 34A - 34E) angeordnet sind.

15. Vorrichtung nach Anspruch 14, **dadurch gekennzeichnet, dass** die Masken (18) und Blenden (6) in der Wechseleinrichtung (54) sich je in einer Fassung (55, 56) befinden, die je in einem Magazin angeordnet sind.

16. Vorrichtung nach einem der Ansprüche 11 bis 15, **dadurch gekennzeichnet, dass** sie ein Diffraktometer (12) aufweist, das je mindestens ein CCD-Array (80, 80F) zur Vermessung der von den mit dem Excimerlaser, bzw. mit dem Femtosekundenlaser erzeugten Strukturen reflektierten und gebeugten Strahlung (14, 14F) aufweist.

17. Vorrichtung nach einem der Ansprüche 11 bis 16, zur Strukturierung von Bereichen einer Prägewalze zum Prägen von Authentifizierungsmerkmalen und/oder beugungsoptisch wirkenden Bereichen auf einer Verpackungsfolie.

18. Vorrichtung nach einem der Ansprüche 11 bis 17, zur Strukturierung von Bereichen von beschichteten und unbeschichteten Uhrenteilen, Münzen oder Schmuckgegenständen zur Erzeugung von Authentifizierungsmerkmalen und/oder beugungsoptisch wirkenden Zeichen.

19. Verpackungsfolie, die mit der Vorrichtung gemäss Anspruch 17 hergestellt wurde, **dadurch gekennzeichnet, dass** sie beugungsoptisch wirkende Bereiche und/oder Authentifizierungsmerkmale aufweist, die mindestens eine durch einen Excimerlaser im Maskenprojektionsverfahren hergestellte erste Struktur und mindestens eine diese überlagernde, durch einen Femtosekunden- oder PikosekundenLaser im Fokusverfahren erzeugte, zweite Struktur aufweist.

20. Verpackungsfolie nach Anspruch 19, **dadurch gekennzeichnet, dass** sie dort, wo sie keine Authentifizierungsmerkmale und/oder beugungsoptisch wirkende Bereiche sowie Logos enthält, satiniert ist.
